# EUROPÄISCHE PATENTSCHRIFT

(11) **EP 2 280 869 B1**
(45) Veröffentlichungstag und Bekanntmachung des Hinweises auf die Patenterteilung: **19.09.2012**
(21) Anmeldenummer: 09753817.7
(22) Anmeldetag: 20.05.2009
(51) Int. Cl.: B64D 13/00

(54) **VORRICHTUNG UND VERFAHREN ZUR ABLUFTKÜHLUNG VON FLUGZEUGKLIMAANLAGEN**
DEVICE AND METHOD FOR COOLING EXHAUST AIR OF AIRCRAFT AIR-CONDITIONING SYSTEMS
DISPOSITIF ET PROCÉDÉ DE REFROIDISSEMENT DE L AIR ÉVACUÉ DES ÉQUIPEMENTS DE CLIMATISATION D AÉRONEF

(30) Priorität: 30.05.2008 DE 102008002116; 30.05.2008 US 130390
(43) Veröffentlichungstag der Anmeldung: 09.02.2011
(73) Patentinhaber: Airbus Operations GmbH, 21129 Hamburg (DE)
(72) Erfinder: SELCHERT, Thomas, 22765 Hamburg (DE); SOLNTSEV, Alexander, 21509 Glinde (DE)
(74) Vertreter: Isarpatent
(86) Internationale Anmeldenummer: PCT/EP2009/056144
(87) Internationale Veröffentlichungsnummer: WO 2009/144162

(56) Entgegenhaltungen:
- WO-A-2005/063569
- DE-A1- 10 244 199
- DE-C1- 10 119 433
- US-A- 2 767 561

## Beschreibung

Die vorliegende Erfindung betrifft eine Vorrichtung und ein Verfahren zur Abluftkühlung von Flugzeugklimaanlagen.

Bei neuen Flugzeugentwicklungen kommen vermehrt CFK-Werkstoffe zum Einsatz. Für den Einsatz ist es erforderlich, äußere Einflussfaktoren wie z.B. Temperatur und Feuchtigkeit auf die materialspezifischen Eigenschaften anzupassen, um das Festigkeitsverhalten möglichst wenig zu beeinträchtigen.

Heutige Flugzeugklimaanlagen (Frischluftversorgungssysteme) arbeiten nach dem Prinzip der einstufigen Verdichtung über einen Kompressor, der von einer Luftturbine angetrieben wird, siehe Dokument DE10119433, das als nächskiegender Stand der Technik betrachtet wird. Dabei wird im Flug die Stauluft durch die Außenströmung und am Boden ein Gebläse im Stauluftkanal zur Abkühlung der hei-βen und verdichteten Triebwerkszapfluft eingesetzt. Diese wiederum treibt über eine Turbine den Kompressor an und wird den Anforderungen in der Kabine entsprechend konditioniert.

Der Stauluftkanal des Frischluftversorgungssystems hat die Aufgabe, die Außenluft als Kühlungsluft für die Wärmetauscher zur Verfügung zu stellen. Der Stauluftkanal besteht in der Regel aus einem NACA - Staulufteinlasskanal, einem Diffusor, einer Gummischlauchverbindung, eventuell einem Stauluftkanalplenum und einem Stauluftauslasskanal. Zwischen dem Stauluftkanalplenum und dem Stauluftauslasskanal sind die Wärmetauscher und das Plenum des Frischluftversorgungssystems mit einem ACM - Fan (ACM - Gebläse, ACM = Air Cycle Machine = Dreiradturbomaschine (Turbine, Kompressor, Fan)) installiert. Der ACM-Fan und der Kompressor werden durch die Expansion in einer Turbine angetrieben. Der ACM - Fan sorgt dafür, dass auch am Boden die Kühlungsluft durch die Wärmetauscher befördert wird.

Im Flug gelangt die Außenströmung über den Staulufteinlasskanal, der meistens eine NACA - Form aufweist, in den Stauluftkanal. Der dynamische Anteil des Totaldruckes wandelt sich im Diffusor teilweise (die Strömung verlangsamt sich) in den statischen Anteil um. So entsteht der statische Überdruck (relativ zum Umgebungsdruck), der auch Staudruck am Wärmetauschereingang genannt wird. Der Durchfluss der Kühlungsluft wird durch zwei bewegliche, miteinander verbundene Staulufteinlass-Kanalklappen reguliert. Hierbei ist die in Flugrichtung vordere Klappe fest am Rahmen angeschlagen und wird am Ende über einen Hebel von einer Spindel auf/ab bewegt. Die zweite Klappe ist am Ende der ersten Klappe über ein Scharnier mit der ersten Klappe verbunden. Durch die Auf-/Abwärtsbewegung (d.h. durch das Schließen bzw. Öffnen des Staulufteinlasses) vollzieht das hintere Ende der zweiten Klappe eine Parallelverschiebung, die über eine kurze Pendelstange kompensiert wird.

Der Stauluftauslasskanal ist in der Regel nur mit einer Klappe ausgestattet. Die geöffnete Stauluftauslasskanalklappe erzeugt aufgrund der Umströmung durch die Außenluft einen Unterdruck im Stauluftauslasskanal. Dieser Unterdruck beeinflusst den Kühlmassenstrom durch die Wärmetauscher. Die Klappe wird über einen Aktuator betrieben.

Bei dem beschriebenen Verfahren wird die kalte Stauluft, die über den Staulufteinlasskanal durch die Wärmetauscher strömt, soweit erwärmt, dass die Auslass-Ablufttemperatur im Bereich bis 200°C liegen kann. Im Flug kann sich diese heiße Abluft durch die Wirkung der Außenströmung an die Flugzeugfläche anlegen. Trotz einer gewissen Abkühlung durch die Außenströmung kann die Temperatur noch bis zu 160°C betragen, wenn sie auf die Flugzeug CFK-Struktur auftrifft. Die Festigkeiten derzeitiger CFK-Materialien sind bis zu einem Temperaturbereich von 100°C bis 120°C, je nach Belastungsprofil und Umgebungsbedingung, noch quantitativ bestimmbar. Belastungen über diesen Temperaturbereich hinaus können zu irreversiblen Materialschädigung und somit zum Versagen führen.

Eine heutige Lösung zur Reduzierung der Auslasstemperatur sieht einen so genannten Kühlfilm vor, der wie ein kaltes Luftpolster zwischen der heißen Abluft und der Flugzeugoberfläche wirkt, so wie beispielsweise in der DE 102 44 199 A1 beschrieben. Der Kühlfilm bewirkt, dass die Temperatur der Flugzeugoberfläche unter der für CFK kritischen Temperatur gehalten wird. Der Kühlfilm entsteht auf Grund der Druckdifferenz zwischen dem Einbauraum der Flugzeugklimaanlage und der Umgebung. Aufgrund der Position des Stauluftauslasskanals an der Flugzeugoberfläche entsteht während des Fluges an der Flugzeugoberfläche im Bereich des Stauluftkanals ein starkes Unterdruckgebiet. Die Quelle für den Kühlfilm ist die Ventilationsluft, die vom separaten Staulufteinlass zur Verfügung gestellt wird. Der Kühlfilm wird gezielt unter den Abluftstrom geleitet.

Der große Nachteil bei diesem Prinzip besteht darin, dass beim Ausfall des Kühlfilms, z.B. durch einen Fremdkörpereinschlag oder spezifische Flugmanöver, unbemerkt eine Überhitzung des Flügelkastens auftreten kann, da die Flugzeugklimaanlage weiterhin in Betrieb ist. Eine elektrische Abschaltfunktion ist im Hinblick auf die Sicherheitsanforderungen problematisch.

Der Kühlungsluftfilm kann auch nicht in jeder Flugphase aufrecht erhalten werden. Während des Landeanflugs und während der Langsamflugmission werden die Flügelklappen und/oder Spoiler/ Airbrakes herausgefahren, so dass der oben genannte Einbauraum der Flugzeugklimaanlage mit der Umgebung verbunden wird. In Bereichen der Flügelklappen und Spoiler/ Airbrakes entsteht ein stärkerer Unterdruck als im Bereich des Stauluftauslasskanals, so dass die Kühlluft nicht durch den Schlitz für den Kühlluftfilm sondern im Bereich von Flügelklappen und Spoiler/ Airbrakes herausströmt. Dadurch wird in diesen Flugphasen kein Schutz gegen heiße Abluft durch den Kühlfilm gewährleistet. Auch während eines Fehlerfalles, wie einer Beschädigung der Flugzeugoberfläche, die zum Ausfall des Kühlluftfilms führen kann, besteht kein Schutz gegen hei-βe Abluft.

Es ist daher Aufgabe der vorliegenden Erfindung eine Vorrichtung gemäβ Anspruch 1 sowie in Verfahren gemäβ Anspruch 11 zur Verfügung zu stellen, die bzw. das es ermöglicht, die heiße Abluft von einem Frischluftversorgungssystem nach Bedarf bereits im Stauluftauslasskanal abzukühlen, so dass die hinter dem Kanal liegende Flugzeug-CFK-Struktur niedrigen Ablufttemperaturen ausgesetzt wird.

Erfindungsgemäß wird diese Aufgabe jeweils durch die Merkmale der unabhängigen Ansprüche gelöst. In den Unteransprüchen finden sich vorteilhafte Ausgestaltungen und Verbesserungen der Erfindung.

Bei einer erfindungsgemäßen Vorrichtung zur Abluftkühlung von Flugzeugklimaanlagen ist ein Bypasskanal vorgesehen, der eine Flugzeugklimaanlage, die einem Stauluftkanal mit einem Staulufteinlass-Kanalabschnitt nachgeschaltet angeordnet ist, umgeht und in einen Auslasskanal, der der Flugzeugklimaanlage nachgeschaltet angeordnet ist, vor einer Austrittsöffnung für Abluft einmündet, wobei für den Stauluftkanal und den Bypasskanal ein gemeinsamer Einlass vorhanden ist.

Bei der vorliegenden Erfindung wird die Abluft schon vor dem Austritt aus dem Auslass über einen Stauluftbypasskanal soweit abgekühlt, dass die für CFK kritische Temperatur nicht erreicht werden kann. Bei einem Ausfall des Stauluftbypasskanals fällt auch die Flugzeugklimaanlage aus bzw. ist ausgeschaltet, so dass ein Fehler nicht eine Überhitzung der CFK-Flugzeugstruktur zur Folge hat. Hierbei wird sowohl der Stauluftkanal als auch ein variabler Bypasskanal von einem einzigen Lufteinlass gespeist.

Bevorzugt wird der Bypasskanal möglichst direkt mit dem Flugzeugklimaanlagen-Auslasskanal verbunden, um so den Druckverlust gering zu halten. Er mündet bevorzugt im Flugzeugklimaanlagen-Auslasskanal noch vor dem Austritt der Abluft in die Umgebung. Der Kanal umgeht somit die Flugzeugklimaanlage und befördert kalte Stauluft in den heißen Abluftstrom.

Für die Stauluft und den Bypasskanal wird bevorzugt ein gemeinsamer Einlass vorgesehen. Das bietet den Vorteil, dass der Kühlfilm während des Betriebs der Flugzeugklimaanlage stets vorhanden ist.

Durch eine Bypasskanalklappe wird die variable Durchlässigkeit des Bypasskanals realisiert. Bei dieser konstruktiven Lösung wird die Parallelverschiebung der zweiten Klappe des Staulufteinlasskanals genutzt, um die Einlassöffnung des Bypasskanals zu regulieren. Anstelle der Pendelstange übernimmt eine Einlassklappe des Bypasskanals die Funktion der Pendelstange und regelt gleichzeitig den Öffnungsquerschnitt des Bypasskanals. Bei geschlossenen Klappen des Staulufteinlasskanals wird der Bypasskanal geöffnet. Befinden sich die Klappen des Staulufteinlasskanals in der maximalen Stauluftkanalklappenstellung für den Flugfall, wird der Bypasskanal maximal geschlossen. Das Ende der zweiten Klappe des Staulufteinlasskanals bildet die Entnahmestelle der kalten Luft für den Bypasskanal.

Die rein mechanische Regelung arbeitet nach folgendem Prinzip. Ist eine hohe Kühlleistung der Flugzeugklimaanlage notwendig, wird der Staulufteinlasskanal maximal geöffnet (Klappen bewegen sich abwärts). Für diesen Kühlfall wird die maximal zur Verfügung stehende Stauluft zum Herunterkühlen der Zapfluft durch die Wärmeaustauscher benötigt. Hier ist das Design so ausgelegt, dass die Öffnung des Bypasskanals möglichst weit geschlossen wird (Klappe des Bypasskanals wird geschlossen, Durchlässigkeit vom Bypasskanal ist gering). Da in diesem Fall der Staudruck im Stauluftkanal hoch ist, wird der Massenstrom durch den Bypasskanal ausreichend für die Schutzfunktion sein. Zudem steht für diesen Betriebszustand ein hoher Kühlungsluftmassenstrom zur Verfügung und somit fällt die Ablufttemperatur nicht in den kritischen Temperaturbereich. Deswegen ist auch kein großer Bypasskühlstrom erforderlich.

Im Vergleich dazu soll im Heizfall möglichst wenig Wärme von der Zapfluft abgegeben werden. Deshalb wird der Staulufteinlasskanal auf die minimale Öffnung gefahren (Klappen bewegen sich aufwärts). In diesem Fall ist der Staudruck im Stauluftkanal niedrig, so dass die hohe Durchlässigkeit des Bypasskanals notwendig wird, um den ausreichenden Massenstrom durch den Bypasskanal zu garantieren. Zusätzlich wird für diesen Betriebszustand die geringe Menge an Stauluft stark durch die Zapfluft erwärmt, so dass der erhöhte Bypasskühlluftstrom notwendig wird. Hier ist das Design so ausgelegt, dass die Öffnung des Bypasskanals möglichst weit geöffnet wird (Durchlässigkeit vom Bypasskanal ist maximal).

Das für den Bodenbetrieb installierte Gebläse schaufelt die Umgebungsluft zu den Wärmeaustauschern und erzeugt im Staulufteinlasskanal einen Unterdruck. Hierdurch kann heiße Abluft über den Bypasskanal zum Einlass gelangen, womit sich die Ablufttemperatur bis in den kritischen Bereich erwärmen kann. Deshalb ist für diesen Fall ein Rückschlagventil vorgesehen.

Durch die konstruktive Integration des Bypasskanals und des Stauluftkanals in einen Lufteinlass ist ein klarer Sicherheitsvorteil gegenüber einem separaten Bypasskanal erreichbar. Bei einem Schaden am NACA-Einlass, z.B. durch einen Vogelschlag, ist mit hoher Wahrscheinlichkeit neben dem Bypasskanal auch gleichzeitig die Flugzeugklimaanlage nicht mehr funktionsfähig. In diesem Fall gelangt keine heiße Abluft mehr auf die Flugzeugstruktur. Im Vergleich dazu würde bei einem separaten Bypasseinlass die Flugzeugklimaanlage über ihren eigenen Kanal weiter laufen, so dass die heiße Abluft ungehindert auf die Flugzeugstruktur gelangen und hier das Material nachhaltig schädigen kann. Die rein mechanische Konstruktion birgt gegenüber elektrischen Lösungen (Sensoren, zusätzliche elektrische Klappensteuerung usw.) eine hohe Zuverlässigkeit.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Querschnittsansicht einer Klimaanlage mit einem Stauluftkanal;
- Fig. 2: eine schematische Querschnittsansicht der Anordnung eines Bypasskanals an einem Stauluftkanal; und
- Fig. 3: eine schematische Querschnittsansicht der Klappen am Staulufteinlasskanal und Bypasskanal von der Ausführungsform aus Fig. 2.

In den Figuren bezeichnen dieselben Bezugszeichen gleiche oder funktionsgleiche Komponenten, soweit nichts Gegenteiliges angegeben ist.

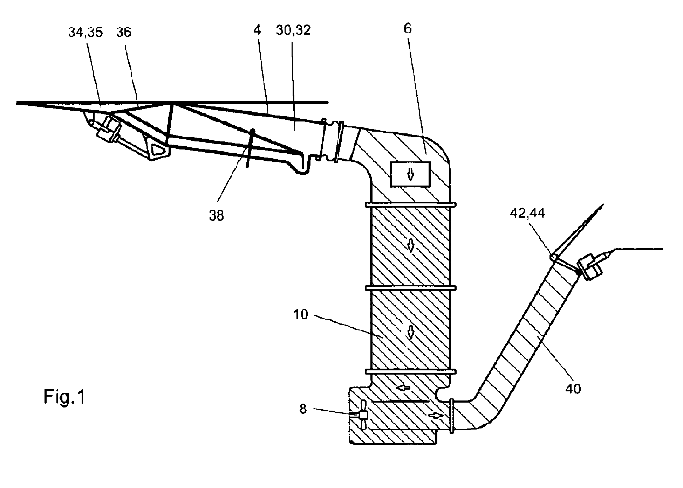

Fig. 1 zeigt eine schematische Querschnittsansicht einer Klimaanlage 10 mit einem Stauluftkanal 30. Eine Einlassöffnung 34 eines Staulufteinlasskanals 32 ist links oben in Fig. 1 dargestellt. Der Staulufteinlasskanal 32 führt über einen Diffusor 4 und ein Stauluftkanalplenum 6 zu einer Klimaanlage 10. Der Klimaanlage 10 nachgeschaltet ist ein Stauluftauslasskanal 40 angeordnet, dessen Austrittsöffnung 42 von einer Stauluftkanalauslassklappe 44 abgeschlossen wird. Der Stauluftkanal 30 weist somit einen Staulufteinlasskanal 32 und einen Stauluftauslasskanal 40 auf. Am unteren Teil der Klimaanlage 10 ist ein Gebläse 8 angeordnet. Ein Einlassquerschnitt 35 der Einlassöffnung 34 des Staulufteinlasskanals 32 wird von einer ersten Klappe 36 und einer zweiten Klappe 38 begrenzt.

Im Betrieb gelangt Luft durch die Einlassöffnung 34 in den Staulufteinlasskanal 32 und wird dort hindurch zu der Klimaanlage 10 für einen Wärmeaustausch geleitet. Nachdem die Luft durch die Klimaanlage 10 geführt wurde, wird sie über den Stauluftauslasskanal 40 an die Umgebung abgegeben. Die Menge der in den Staulufteinlasskanal 32 einströmenden Luft wird dadurch verändert, dass mittels der ersten Klappe 36 und der zweiten Klappe 38 der Einlassquerschnitt 35 des Staulufteinlasskanals 32 verändert wird. Eine Vergrößerung des Einlassquerschnitts 35 bedingt, dass mehr Luft in den Staulufteinlasskanal 32 einströmen kann. Die Luft wird dann über den Diffusor 4 und das Stauluftkanalplenum 6 der Klimaanlage 10 zugeführt, wo ein Wärmeaustausch erfolgt. Die Luft gelangt nach einem Passieren der Klimaanlage durch den Stauluftauslasskanal 40 an die Umgebung. Das Gebläse 8, das der Klimaanlage 10 nachgeschaltet angeordnet ist, unterstützt die Strömung der Luft durch den Stauluftkanal 30, wenn die Einlassöffnung 34 nur schwach angeströmt wird, wie dies z.B. der Fall ist, wenn das Flugzeug am Boden steht. Mittels der Stauluftkanalauslassklappe 44 kann das Abströmen der Luft aus dem Stauluftauslasskanal 40 eingestellt werden.

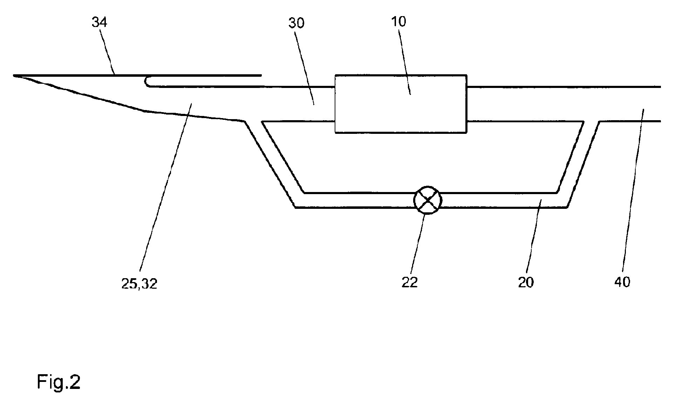

Fig. 2 zeigt eine schematische Querschnittsansicht der Anordnung eines Bypasskanals 20 an einem Stauluftkanal 30. Die Einlassöffnung 34 ist wieder links oben in der Figur dargestellt. An die Einlassöffnung 34 schließt sich der Staulufteinlasskanal 32 an, der Teil des Stauluftkanals 30 ist. Im Unterschied zu dem konventionellen Aufbau aus Fig. 1 zweigt bei dieser erfindungsgemäßen Anordnung ein Bypasskanal 20 von einem gemeinsamen Einlass 25 des Stauluftkanals 30 und des Bypasskanals 20 ab, der die Klimaanlage 10 umgeht und in den Stauluftauslasskanal 40 mündet. Der Bypasskanal weist ein Rückschlagventil 22 auf.

Der Bypasskanal 20 wird von der kühlen Luft aus dem Staulufteinlasskanal 32 gespeist. Die Luft, die aus der Klimaanlage 10 in den Stauluftauslasskanal 40 tritt, ist manchmal sehr heiß und es ist erforderlich, diese zu kühlen. Dies geschieht hier dadurch, dass der Bypasskanal 20 in den Stauluftauslasskanal 40 mündet. Die kühle Luft aus dem Bypasskanal 20 wird dadurch in den Stauluftauslasskanal 40 geleitet und vermischt sich mit der heißen Luft aus der Klimaanlage 10. Dadurch wird die Luft im Stauluftauslasskanal, die an die Umgebung abgegeben wird, gekühlt. Schäden an empfindlichen CFK-Bauteilen durch zu heiße aus dem Stauluftauslasskanal 40 austretende Luft können dadurch verhindert werden.

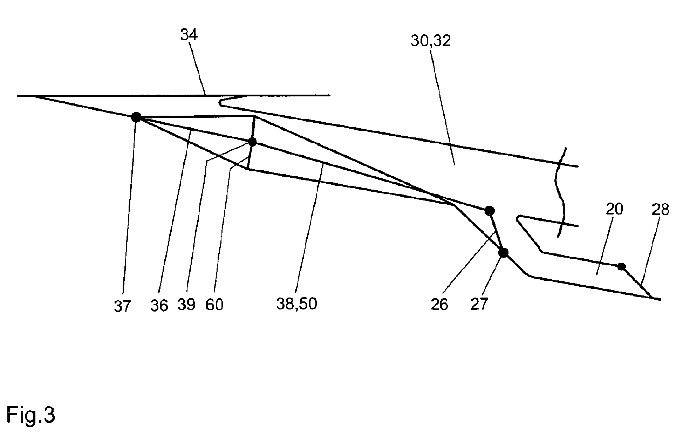

Fig. 3 zeigt eine schematische Querschnittsansicht der Klappen am Staulufteinlasskanal 32 und Bypasskanal 20 gemäß der Ausführungsform aus Fig. 2. Die Elemente Einlassöffnung 34, Stauluftkanal 30 und Bypasskanal 20 sind entsprechend der Fig. 2 angeordnet. Eine erste Klappe 36 ist um eine Schwenkachse 37 schwenkbar angeordnet und eine zweite Klappe 38 ist um eine Schwenkachse 39 schwenkbar angeordnet, um die Einlassöffnung 34 des Staulufteinlasskanals 32 zu schießen und zu öffnen. Mit der zweiten Klappe 38 ist die Bypasskanal-Einlassklappe 26, die den Bypasskanal 20 öffnet und schließt, über ein Gestänge 50 entfernt von einer Schwenkachse 27 der Bypasskanal-Einlassklappe 26 verbunden. Eine Zugdruckeinrichtung 60 schwenkt die erste Klappe 36 und verschiebt die Schwenkachse 39 der zweiten Klappe 38.

Um die Einlassöffnung 34 des Staulufteinlasskanals 32 zu schließen, schiebt die Zugdruckeinrichtung 60 die Schwenkachse 39 der zweiten Klappe 38 nach oben und schwenkt dabei die erste Klappe 36 nach oben, so dass die erste Klappe 36 vor die Einlassöffnung 34 verlagert wird. Neben einer ganz geöffneten Stellung und einer Schließstellung der ersten Klappe 36 sind Zwischenstellungen vorgesehen. Durch die Verlagerung der zweiten Klappe 38 an der Schwenkachse 39 nach oben, wird diese insgesamt so verlagert, dass sie die daran befestigte Bypasskanal-Einlassklappe 26 öffnet, indem diese um ihre Schwenkachse 27 geschwenkt wird. Wird die erste Klappe 36 geschlossen, wird dadurch die Bypasskanal-Einlassklappe 26 des Bypasskanals 20 geöffnet.

Obwohl die vorliegende Erfindung anhand konkreter Ausführungsbeispiele beschrieben wurde, ist sie darauf nicht beschränkt, sonder auf vielfältige Weise modifizierbar. Insbesondere sind auch alle denkbaren Kombinationen der obigen Ausführungsbeispiele möglich.

### Bezugszeichenliste

- 4: Diffusor
- 6: Stauluftkanalplenum
- 8: Gebläse
- 10: Klimaanlage
- 20: Bypasskanal
- 22: Rückschlagventil
- 25: gemeinsamer Einlass
- 26: Bypasskanal-Einlassklappe
- 27: Schwenkachse der Bypasskanal-Einlassklappe
- 28: Bypasskanalauslassklappe
- 30.: Stauluftkanal
- 32: Staulufteinlasskanal
- 34: Einlassöffnung
- 35: Einlassquerschnitt
- 36: erste Klappe
- 37: Schwenkachse der ersten Klappe
- 38: zweite Klappe
- 39: Schwenkachse der zweiten Klappe
- 40: Stauluftauslasskanal
- 42: Austrittsöffnung
- 44: Stauluftkanalauslassklappe
- 50: Gestänge
- 60: Zugdruckeinrichtung

## Patentansprüche

1. Vorrichtung zur Abluftkühlung von Flugzeugklimaanlagen (10) mit einem Bypasskanal (20), welcher eine Flugzeugklimaanlage (10) umgeht, die einem Stauluftkanal (30) mit einem Staulufteinlass-Kanalabschnitt (32) nachgeschaltet angeordnet ist, und welcher in einen Auslasskanal (40), der der Flugzeugklimaanlage (10) nachgeschaltet angeordnet ist, vor einer Austrittsöffnung (42) für Abluft einmündet, wobei für den Stauluftkanal (30) und den Bypasskanal (20) ein gemeinsamer Einlass (25) vorgesehen ist.

2. Vorrichtung zur Abluftkühlung von Flugzeugklimaanlagen nach Anspruch 1,
**dadurch gekennzeichnet,**
**dass** eine erste Klappe (36) derart an einer Einlassöffnung (34) des Staulufteinlass-Kanalabschnitts (32) verstellbar angeordnet ist, dass ein Einlassquerschnitt (35) der Einlassöffnung (34) des Staulufteinlass-Kanalabschnitts (32) mittels der verstellbaren Klappe (36) zur Einströmluftmengeneinstellung in der Größe veränderbar ist.

3. Vorrichtung zur Abluftkühlung von Flugzeugklimaanlagen nach Anspruch 2,
**dadurch gekennzeichnet,**
**dass** eine zweite Klappe (38) zur Einströmluftmengeneinstellung an der ersten Klappe (36) gelenkig derart befestigt ist, dass sich eine Schwenkachse (39) der zweiten Klappe (38) bei einer Auslenkung der ersten Klappe (36) translatorisch im Wesentlichen auf die Schwenkachse (37) der ersten Klappe (36) zu oder davon weg bewegt.

4. Vorrichtung zur Abluftkühlung von Flugzeugklimaanlagen nach Anspruch 2 oder 3,
**dadurch gekennzeichnet,**
**dass** die erste Klappe (36) um ihre Schwenkachse (37) mittels einer gelenkig an ihr befestigten Zugdruckeinrichtung (60) im wesentlichen in vertikaler Richtung verschwenkbar ist.

5. Vorrichtung zur Abluftkühlung von Flugzeugklimaanlagen nach wenigstens einem der vorgehenden Ansprüche,
**dadurch gekennzeichnet,**
**dass** der Stauluftauslasskanal (40) eine Stauluftkanalauslassklappe (44) aufweist, die in geöffnetem Zustand bei einer Umströmung durch eine Außenluft einen Unterdruck im Stauluftauslasskanal (40) erzeugt.

6. Vorrichtung zur Abluftkühlung von Flugzeugklimaanlagen nach wenigstens einem der vorgehenden Ansprüche,
**dadurch gekennzeichnet,**
**dass** im Bypasskanal (20) ein Rückschlagventil (22) angeordnet ist.

7. Vorrichtung zur Abluftkühlung von Flugzeugklimaanlagen nach wenigstens einem der vorgehenden Ansprüche,
**dadurch gekennzeichnet,**
**dass** der Bypasskanal (20) eine verstellbare Bypasskanal-Einlassklappe (26) zum Einstellen der in den Bypasskanal (20) einströmenden Luftmenge aufweist.

8. Vorrichtung zur Abluftkühlung von Flugzeugklimaanlagen nach Anspruch 7,
**dadurch gekennzeichnet,**
**dass** die Bypasskanal-Einlassklappe (26) mit der ersten verstellbaren Klappe (36) und/oder der zweiten verstellbaren Klappe (38) kinematisch gekoppelt ist.

9. Vorrichtung zur Abluftkühlung von Flugzeugklimaanlagen nach Anspruch 7 oder 8,
**dadurch gekennzeichnet,**
**dass** die Bypasskanal-Einlassklappe (26) mit der zweiten Klappe (38) über ein Gestänge (50) gekoppelt ist.

10. Vorrichtung zur Abluftkühlung von Flugzeugklimaanlagen nach wenigstens einem der Ansprüche 6 bis 9,
**dadurch gekennzeichnet,**
**dass** die Bypasskanal-Einlassklappe (26) so gelenkig mit der Schwenkachse (38) der zweiten Klappe (38) gekoppelt ist, dass sie um eine Schenkachse (27) den Bypasskanal (20) öffnend schwenkt, wenn die Schwenkachse (39) der zweiten Klappe (38) nach oben bewegt wird und umgekehrt.

11. Verfahren zur Abluftkühlung von Flugzeugklimaanlagen mittels einer Vorrichtung zur Abluftkühlung von Flugzeugklimaanlagen nach wenigstens einem der Ansprüche 7 bis 10, bei dem die verstellbare erste Klappe (36) und die Bypasskanal-Einlassklappe (26) abhängig von einer Umgebungstemperatur und einer Fluggeschwindigkeit zwischen einer maximalen Kühlstellung und einer maximalen Heizstellung verstellt werden, wobei bei der maximalen Kühlstellung die erste Klappe (36) vollständig geöffnet und die Bypasskanal-Einlassklappe (26) weitgehend geschlossen wird und wobei bei der maximalen Heizstellung die erste Klappe (36) weitgehend geschlossen und die Bypasskanal-Einlassklappe (26) vollständig geöffnet wird.

## Claims

1. A device for cooling waste air from aircraft air-conditioning installations (10) with a bypass duct (20), which bypasses an aircraft air-conditioning installation (10) arranged downstream of a ram air duct (30) with a ram air inlet duct portion (32), and which leads, upstream of an outflow opening (42) for waste air, into an outlet duct (40) arranged downstream of the aircraft air-conditioning installation (10), a common inlet (25) being provided for the ram air duct (30) and the bypass duct (20).

2. A device for cooling waste air from aircraft air-conditioning installations according to claim 1, **characterised in that** a first damper (36) is arranged adjustably in such a way at an inlet opening (34) of the ram air inlet duct portion (32) that an inlet cross-section (35) of the inlet opening (34) of the ram air inlet duct portion (32) may be varied in size by means of the adjustable damper (36) to adjust the quantity of inflowing air.

3. A device for cooling waste air from aircraft air-conditioning installations according to claim 2, **characterised in that** a second damper (38) for adjusting the quantity of inflowing air is attached articulatedly to the first damper (36) in such a way that a pivot pin (39) of the second damper (38) moves translationally substantially towards the pivot pin (37) of the first damper (36) or away therefrom on deflection of the first damper (36).

4. A device for cooling waste air from aircraft air-conditioning installations according to claim 2 or claim 3, **characterised in that** the first damper (36) may be swivelled substantially vertically about its pivot pin (37) by means of a pulling and pushing means (60) attached articulatedly thereto.

5. A device for cooling waste air from aircraft air-conditioning installations according to at least one of the preceding claims, **characterised in that** the ram air outlet duct (40) comprises a ram air duct outlet damper (44), which generates reduced pressure in the ram air outlet duct (40) in the open state when flowed around by external air.

6. A device for cooling waste air from aircraft air-conditioning installations according to at least one of the preceding claims, **characterised in that** a nonreturn valve (22) is arranged in the bypass duct (20).

7. A device for cooling waste air from aircraft air-conditioning installations according to at least one of the preceding claims, **characterised in that** the bypass duct (20) comprises an adjustable bypass duct inlet damper (26) for adjusting the quantity of air flowing into the bypass duct (20).

8. A device for cooling waste air from aircraft air-conditioning installations according to claim 7, **characterised in that** the bypass duct inlet damper (26) is coupled kinematically to the first adjustable damper (36) and/or the second adjustable damper (38).

9. A device for cooling waste air from aircraft air-conditioning installations according to claim 7 or claim 8, **characterised in that** the bypass duct inlet damper (26) is coupled to the second damper (38) via a rod assembly (50).

10. A device for cooling waste air from aircraft air-conditioning installations according to at least one of claims 6 to 9, **characterised in that** the bypass duct inlet damper (26) is coupled articulatedly to the pivot pin (39) of the second damper (38) in such a way that it swivels about a pivot pin (27) to open the bypass duct (20) if the pivot pin (39) of the second damper (38) is moved upwards and vice versa.

11. A method of cooling waste air from aircraft air-conditioning installations by means of a device for cooling waste air from aircraft air-conditioning installations according to at least one of claims 7 to 10, in which the adjustable first damper (36) and the bypass duct inlet damper (26) are adjusted as a function of ambient temperature and flying speed between a maximum cooling position and a maximum heating position, wherein in the maximum cooling position the first damper (36) is completely open and the bypass duct inlet damper (26) is largely closed and wherein in the maximum heating position the first damper (36) is largely closed and the bypass duct inlet damper (26) is completely open.

## Revendications

1. Dispositif de refroidissement de l'air évacué des équipements de climatisation d'aéronef (10), comprenant un conduit de dérivation (20), qui contourne un équipement de climatisation d'aéronef (10), qui est disposé en aval d'un conduit à air dynamique (30) muni d'une partie de conduit d'entrée d'air dynamique (32), et qui débouche dans un conduit de sortie (40), qui est disposé en aval de l'équipement de climatisation d'aéronef, en amont d'une ouverture de sortie (42) pour l'air évacué, une entrée (25) commune pour le conduit à air dynamique (30) et le conduit de dérivation (20) étant prévue.

2. Dispositif de refroidissement de l'air évacué des équipements de climatisation d'aéronef selon la revendication 1, **caractérisé par le fait qu'**un premier clapet (36) est disposé de manière réglable au niveau d'un orifice d'admission (34) de la partie de conduit d'entrée d'air dynamique (32) de telle sorte qu'une taille de la section d'admission (35) de l'orifice d'admission (34) de la partie de conduit d'entrée d'air dynamique (32) peut être modifiée au moyen du clapet (36) réglable pour ajuster la quantité de flux d'air.

3. Dispositif de refroidissement de l'air évacué des équipements de climatisation d'aéronef selon la revendication 2, **caractérisé par le fait qu'**un second clapet (38) pour ajuster la quantité de flux d'air est fixé de manière articulée au niveau du premier clapet (36) de telle sorte qu'un axe de pivotement (39) du second clapet (38) se déplace en translation en s'approchant ou en s'éloignant essentiellement sur l'axe de pivotement (37) du premier clapet (36) en cas de déviation du premier clapet (36).

4. Dispositif de refroidissement de l'air évacué des équipements de climatisation d'aéronef selon la revendication 2 ou 3, **caractérisé par le fait que** le premier clapet (36) peut pivoter essentiellement dans la direction verticale autour de son axe de pivotement (37) au moyen d'un dispositif de pression de traction (60) fixé de manière articulée sur le clapet.

5. Dispositif de refroidissement de l'air évacué des équipements de climatisation d'aéronef selon au moins l'une quelconque des revendications précédentes, **caractérisé par le fait que** le conduit de sortie à air dynamique (40) présente un clapet de sortie de conduit à air dynamique (44), qui produit une dépression dans le conduit de sortie à air dynamique (40) à l'état ouvert en cas d'écoulement de contournement par un air extérieur.

6. Dispositif de refroidissement de l'air évacué des équipements de climatisation d'aéronef selon au moins l'une quelconque des revendications précédentes, **caractérisé par le fait qu'**un clapet anti-retour (22) est disposé dans le conduit de dérivation (20).

7. Dispositif de refroidissement de l'air évacué des équipements de climatisation d'aéronef selon au moins l'une quelconque des revendications précédentes, **caractérisé par le fait que** le conduit de dérivation (20) présente un clapet d'entrée du conduit de dérivation (26) réglable pour ajuster la quantité d'air acheminé dans le conduit de dérivation (20).

8. Dispositif de refroidissement de l'air évacué des équipements de climatisation d'aéronef selon la revendication 7, **caractérisé par le fait que** le clapet d'entrée du conduit de dérivation (26) est couplé cinématiquement au premier clapet (36) réglable et/ou au second clapet (38) réglable.

9. Dispositif de refroidissement de l'air évacué des équipements de climatisation d'aéronef selon la revendication 7 ou 8, **caractérisé par le fait que** le clapet d'entrée du conduit de dérivation (26) est couplé au second clapet (38) par l'intermédiaire d'une tige (50).

10. Dispositif de refroidissement de l'air évacué des équipements de climatisation d'aéronef selon au moins l'une des revendications 6 à 9, **caractérisé par le fait que** le clapet d'entrée du conduit de dérivation (26) est couplé de manière articulée à l'axe de pivotement (39) du second clapet (38) de telle sorte qu'il pivote le conduit de dérivation (20) ouvert autour d'un axe de pivotement (27), quand l'axe de pivotement (39) du second clapet (38) est déplacé vers le haut et vice versa.

11. Procédé de refroidissement de l'air évacué des équipements de climatisation d'aéronef au moyen d'un dispositif de refroidissement de l'air évacué des équipements de climatisation d'aéronef selon au moins l'une des revendications 7 à 10, dans lequel le premier clapet réglable (36) et le clapet d'entrée du conduit de dérivation (26) sont ajustés en fonction d'une température ambiante et d'une vitesse de vol entre une position de refroidissement maximale et une position de chauffage maximale, le premier clapet (36) étant entièrement ouvert et le clapet d'entrée du conduit de dérivation (26) étant largement fermé dans la position de refroidissement maximale et le premier clapet (36) étant largement fermé et le clapet d'entrée du conduit de dérivation (26) étant entièrement ouvert dans la position de chauffage maximale.
